# EUROPÄISCHE PATENTSCHRIFT

(11) **EP 3 448 724 B1**
(45) Veröffentlichungstag und Bekanntmachung des Hinweises auf die Patenterteilung: **01.04.2020**
(21) Anmeldenummer: 17718534.5
(22) Anmeldetag: 21.04.2017
(51) Int. Cl.: B60R 21/203

(54) **GASSACKEINHEIT UND FAHRZEUGINSASSENSICHERHEITSSYSTEM MIT EINER SOLCHEN GASSACKEINHEIT SOWIE HERSTELLUNGSVERFAHREN**
AIRBAG UNIT AND PASSENGER SAFETY SYSTEM WITH SUCH AIRBAG UNIT AND MANUFACTURING METHOD
UNITÉ DE AIRBAG ET SYSTÈME DE SÉCURITÉ DES PASSAGERS D'UN TEL UNITÉ AIRBAG ET PROCÉDÉ DE FABRICATION

(30) Priorität: 26.04.2016 DE 102016005020
(43) Veröffentlichungstag der Anmeldung: 06.03.2019
(73) Patentinhaber: Dalphi Metal España, S.A., 36213 Vigo (ES)
(72) Erfinder: CASAL ALONSO, Jacobo, 36393 Baiona (ES); BARROS ALONSO, Rubén, 36215 Vigo (ES)
(74) Vertreter: ZF TRW Patentabteilung
(86) Internationale Anmeldenummer: PCT/EP2017/059478
(87) Internationale Veröffentlichungsnummer: WO 2017/186585

(56) Entgegenhaltungen:
- EP-A2- 0 983 914
- DE-A1-102007 049 234
- DE-U1-202014 008 432

## Beschreibung

Die Erfindung betrifft eine Gassackeinheit gemäß dem Oberbegriff des Patentanspruchs 1 sowie ein Fahrzeuginsassensicherheitssystem mit einer solchen Gassackeinheit. Ferner befasst sich die Erfindung mit einem Verfahren zur Herstellung einer derartigen Gassackeinheit.

Die DE 10 2007 049 234 B4 beschreibt ein Airbagmodul für ein Kraftfahrzeug, unter anderem mit einem Modulträger, mit einem Gasgenerator und mit wenigstens einem elastischen Dämpfungselement. Die Dämpfungselemente sind auf einem Schwingungstilger angeordnet. Der Gasgenerator wird mit Hohlnieten an den Dämpfungselementen befestigt. Somit ist eine Vielzahl verschiedener Bauteile notwendig, um die Komponenten des Airbagmoduls miteinander zu verbinden. Dies erfordert zusätzliche Schritte in der Herstellung und führt zu erhöhten Produktionskosten, insbesondere in der Großserienfertigung.

Die EP 0 983 914 A2 offenbart ein Airbagmodul mit einem topfförmigen Gasgenerator, einem Luftsack und ein Luftsackhalteblech, wobei der Gasgenerator an einem Generatorträger befestigt wird. Das Gehäuse des Gasgenerators ist hierbei dazu ausgebildet, um mittels eines Bajonett- oder Snap-in-Verschlusses mit dem Airbagmodul verbunden zu werden. Hierzu sind spezielle Haken an einem zusätzlichen zylindrischen Rand des Luftsackhaltebleches vorgesehen. Die Haken erhöhen den Materialaufwand bei der Herstellung und lassen unterschiedliche Ausrichtungen des Gehäuses zum Airbagmodul zu, was zu Produktionsfehlern führen kann. Außerdem sind Vibrationen zwischen dem Airbagmodul und dem Gasgenerator direkt übertragbar.

In der DE 20 2014 008 432 U1 wird eine Vorrichtung zur schwingfähigen Befestigung eines Gasgenerators als Schwingungsdämpfermasse innerhalb eines Airbagmoduls nach dem Oberbegriff von Anspruch 1 beschrieben, wobei ein Befestigungsring zur Befestigung am Gasgenerator vorgesehen ist, der durch einen radial auswärts gerichteten, durchgehenden Ringspalt in radialer Richtung geöffnet und mit mindestens einem axial ausgerichteten Dämpfungsglied versehen ist.

Die Aufgabe der Erfindung besteht darin, eine einfach handzuhabende und kostengünstige Möglichkeit zu schaffen, die Komponenten einer Gassackeinheit, insbesondere den Gasgenerator, das Dämpfungselement und den Modulträger zu verbinden. Ferner ist es Aufgabe der Erfindung, eine derartige Gassackeinheit und ein Fahrzeuginsassensicherheitssystem mit einem solchen Verbindungsmechanismus sowie ein dazu geeignetes Herstellungsverfahren anzugeben.

Erfindungsgemäß wird diese Aufgabe im Hinblick auf eine Gassackeinheit durch den Gegenstand des Patentanspruchs 1, im Hinblick auf das Fahrzeuginsassensicherheitssystem durch den Gegenstand des Patentanspruchs 7 und im Hinblick auf das Herstellungsverfahren durch den Gegenstand der Patentansprüche 8 und 9 gelöst.

Zur Lösung der eingangs genannten Aufgabe sieht die Erfindung eine Gassackeinheit mit wenigstens einem Dämpfungselement, einem Gasgenerator und einem Modulträger vor. Das Dämpfungselement ist zwischen dem Gasgenerator und dem Modulträger angeordnet. Ferner weisen das wenigstens eine Dämpfungselement wenigstens ein Eingriffsmittel und der Gasgenerator wenigstens ein Aufnahmemittel auf. Das Dämpfungselement und der Gasgenerator sind formschlüssig, vorzugsweise in Form eines Bajonettverschlusses, miteinander verbindbar. Auf diese Weise können die Komponenten der Gassackeinheit einfach und kostengünstig miteinander verbunden werden, ohne dass zusätzliche Verbindungselemente und Arbeitsschritte notwendig sind.

Das Dämpfungselement ist zwischen dem Gasgenerator und dem Modulträger angeordnet. Auf diese Weise kann das Dämpfungselement der Übertragung von Vibrationen zwischen dem Gasgenerator und dem Modulträger durch eine (schwindungsdynamische) Entkopplung vorbeugen. Der Gasgenerator weist keine direkte Verbindung zu dem Modulträger auf.

Vorzugsweise ist das wenigstens eine Dämpfungselement aus einem elastischen Material bzw. einer elastischen Materialkombination herstellbar. Insbesondere kann das Dämpfungselement ein Elastomer oder ein vergleichbares Material aufweisen. Somit kann das Dämpfungselement mechanische Schwingungen absorbieren. Indem das Dämpfungselement zwischen dem Modulträger und dem Gasgenerator angeordnet ist, sind die Komponenten schwindungsdynamisch entkoppelt.

Vorteilhafterweise weisen das Dämpfungselement wenigstens ein Eingriffsmittel und der Gasgenerator wenigstens ein Aufnahmemittel auf. Das Dämpfungselement und der Gasgenerator sind hierbei formschlüssig miteinander verbindbar. Die formschlüssige Verbindung zwischen dem Dämpfungselement und dem Gasgenerator kann als ein Bajonettverschluss ausgelegt sein. So ist es möglich, das Dämpfungselement und den Gasgenerator auf einfache Weise schnell und sicher miteinander zu verbinden.

Des Weiteren kann das Dämpfungselement als ein einzelnes Teil oder als mehrere, zusammensetzbare Teile ausgestaltet sein. Insbesondere können ein modulträgerseitiger, erster Teil und ein gasgeneratorseitiger, zweiter Teil vorgesehen sein. Die Teile des Dämpfungselements sind unterschiedlich funktionell ausgestaltbar. Vorzugsweise sind geometrische Verbindungselemente wie das wenigstens eine Eingriffsmittel an einem der beiden Teile anordenbar. Die Teile des Dämpfungselements können aus unterschiedlichen Materialien hergestellt oder herstellbar sein. Auf diese Weise können spezifische Funktionalitäten des Dämpfungselements bereitgestellt werden.

In einer bevorzugten Ausführungsform der Erfindung ist das Dämpfungselement vorzugsweise als ein ringförmiges Dämpfungselement mit einem L-förmigen Querschnitt ausgestaltet. In dieser Ausgestaltung ist das Dämpfungselement vorteilhafterweise dazu ausgelegt, einen Gasgenerator aufzunehmen und den Gasgenerator an dessen Rand mit Hilfe des L-förmigen Querschnitts rundum abzustützen. Bei Verbindung des Gasgenerators mit dem Dämpfungselement ist folglich eine schwingungsdynamische Dämpfung des Gasgenerators sichergestellt.

In einer weiteren Ausführungsform des erfindungsgemäßen Gegenstandes ist das Eingriffsmittel an einer Innenseite, vorzugsweise einem Innendurchmesser, des Dämpfungselements angeordnet. Sofern der Gasgenerator auf den vorzugsweise L-förmigen Querschnitt des ringförmigen Dämpfungselements aufgesetzt ist, ist das Eingriffsmittel des Dämpfungselements dazu ausgelegt, den Gasgenerator bzw. dessen Rand zu hintergreifen. Das bedeutet, dass der Rand des Gasgenerators zwischen einer Auflagefläche des Dämpfungselements und dem Eingriffsmittel des Dämpfungselements angeordnet ist. Auf diese Weise ist eine formschlüssige Verbindung zwischen dem Dämpfungselement und dem Gasgenerator, unter anderem in der bevorzugten Form eines Bajonettverschlusses, realisierbar.

Gemäß der vorliegenden Erfindung ist der Gasgenerator in einer Ausführungsform mit einem Aufnahmemittel als wenigstens ein Materialausschnitt ausgebildet. Der wenigstens eine Materialausschnitt ist insbesondere an einem Rand des Gasgenerators angeordnet. Vorteilhafterweise weist der wenigstens eine Materialausschnitt eine korrespondierende Form zu dem Eingriffsmittel des Dämpfungselements auf. Der Gasgenerator und das Dämpfungselement sind entlang der Materialausschnitte und der Eingriffsmittel aufeinander aufsetzbar, so dass die Eingriffsmittel des Dämpfungselements den Rand des Gasgenerators hintergreifen können. Auf diese Weise ist die Herstellung einer sicheren, formschlüssigen Verbindung zwischen Gasgenerator und Dämpfungselement gewährleistet.

Diese Verbindung kann durch Spannelemente an dem Dämpfungselement zusätzlich unterstützt werden. Durch die Spannelemente wird eine Vorspannung auf die Verbindung zwischen Gasgenerator und Dämpfungselement aufgebracht, so dass ein selbstständiges Lösen der Verbindung verhindert wird. In diesem Falle kann die formschlüssige Verbindung zwischen Gasgenerator und Dämpfungselement im Sinne der vorliegenden Erfindung auch als eine form- und kraftschlüssige Verbindung aufgefasst werden.

Erfindungsgemäß weist das Dämpfungselement ein Ausrichtungsmittel auf, so dass der Gasgenerator und der Modulträger zueinander ausrichtbar sind. Die Montage des Dämpfungselements und des Gasgenerators wird insofern durch das Ausrichtungsmittel erleichtert, indem nach dem Aufsetzen der beiden Komponenten aufeinander die korrekte Ausrichtung der Komponente zueinander durch die Bauteilausgestaltung vorgegeben wird, um eine formschlüssige Verbindung herzustellen. So wird die Montage in kürzester Zeit ermöglicht.

Weiterhin weist das Ausrichtungsmittel des erfindungsgemäßen Gegenstandes vorzugsweise eine modulträgerseitige Erstreckung und eine gasgeneratorseitige Erstreckung auf. Die Modulträgerseite bzw. Gasgeneratorseite des Dämpfungselements beschreibt hierbei jeweils die Seite des Dämpfungselements, die im montierten Zustand der erfindungsgemäßen Gassackeinheit dem Modulträger bzw. dem Gasgenerator zugewandt ist.

Demnach ist das Ausrichtungsmittel derart ausgestaltet, dass es sowohl in Richtung des Modulträgers als auch in Richtung des Gasgenerators jeweils eine Materialerstreckung aufweist. So weist das Ausrichtungsmittel des Dämpfungselements sowohl mit dem Gasgenerator als auch mit dem Modulträger eine funktionelle Wechselwirkung auf, um die korrekte relative Ausrichtung des Gasgenerators, des Dämpfungselements und des Modulträgers der Gassackeinheit sicherzustellen.

In einer weiteren vorteilhaften Ausführung der vorliegenden Erfindung ist das Ausrichtungsmittel in die modulträgerseitige Richtung und in die gasgeneratorseitige Richtung flexibel bzw. federnd gelagert. Bei Verbindung des Gasgenerators, des Dämpfungselements und des Modulträgers erfüllt das flexibel bzw. federnd gelagerte Ausrichtungsmittel somit die Funktion, die korrekte, zweckmäßige Komponentenausrichtung zu unterstützen und gleichzeitig einer fehlerhaften Komponentenausrichtung bei der Montage vorzubeugen. Insbesondere wird dies durch eine Auslenkung des Ausrichtungsmittels in Richtung des Modulträgers oder in Richtung des Gasgenerators ermöglicht.

Unter der flexiblen bzw. federnden Lagerung des Ausrichtungsmittels ist im Sinne der vorliegenden Erfindung auch die Lagerung unter Zuhilfenahme von weiteren mechanischen Elementen, wie z.B. Federn, oder die Kombination von verschiedenen Materialien zur Erzielung spezifischer Biegesteifigkeiten zu verstehen. Bevorzugterweise wird die flexible Lagerung des Ausrichtungsmittels als ein einseitig gelagerter Balken mit einer spezifischen Biegesteifigkeit bzw. Flexibilität vorgesehen. Hierzu kann das Ausrichtungsmittel von einer U-förmigen Durchgangsnut bzw. Durchgangsöffnung umgeben sein. Die Durchgangsnut erstreckt sich entlang der Basis des Ausrichtungsmittels durch das Dämpfungselement hindurch. Die Lagerkraft des federnd gelagerten Ausrichtungsmittels kann durch eine Adaption der Form der Durchgangsnut erfolgen und ist demzufolge variabel einstellbar.

Erfindungsgemäß weist der Gasgenerator, insbesondere der Rand des Gasgenerators, eine Durchgangsöffnung, vorzugsweise in korrespondierender Form zu dem Ausrichtungsmittel, auf. Die Durchgangsöffnung ermöglicht die Aufnahme des Ausrichtungsmittels. Sofern das Dämpfungselement mit dem Gasgenerator formschlüssig verbunden wird, dient das Ausrichtungsmittel zur korrekten Ausrichtung der Komponenten, der Vorbeugung einer fehlerhaften Ausrichtung sowie der formschlüssigen Fixierung der Verbindung bzw. der Komponentenausrichtung. Eine sichere Verbindung des Dämpfungselements und des Gasgenerators ist somit gewährleistet.

Mit dem Ausrichtungsmittel ist in dem Dämpfungselement ein sogenannter "Poka Yoke"-Mechanismus integriert. Dem "Poka Yoke"-Mechanismus liegt das Prinzip zugrunde, eine oder mehrere technische Vorkehrungen zu treffen, um Fehler aufzudecken und/oder zu verhindern. Derartige Vorkehrungen können beispielsweise getroffen werden, indem miteinander interagierende Verbindungsmittel oder Einzelelemente zur Vorgabe spezifischer Komponentenausrichtungen in der Konstruktion der Einzelkomponenten vorgesehen werden.

Dies trifft im Falle der vorliegenden Erfindung insbesondere auf die relative Anordnung der einzelnen Komponenten beim Zusammenbau der Gassackeinheit zu. Durch die Integration des Verbindungsmittels in die Konstruktion des Dämpfungselements ist es nicht notwendig, neben den Komponenten der erfindungsgemäßen Gassackeinheit weitere Verbindungselemente oder Verbindungsmittel einzusetzen. Somit wird eine einfache, kostengünstige und zeitoptimierte Fertigung der Gassackeinheit erreicht.

Ferner ist bei der vorliegenden Erfindung an dem Modulträger eine Durchgangsöffnung zur Aufnahme des Ausrichtungsmittels ausgebildet. Die Durchgangsöffnung des Modulträgers weist vorzugsweise eine korrespondierende Form zu dem Ausrichtungsmittel, insbesondere zu der modulträgerseitigen Erstreckung des Ausrichtungsmittels, auf. Das Ausrichtungsmittel greift sowohl in die Durchgangsöffnung des Gasgenerators als auch in die Durchgangsöffnung des Modulträgers ein. Die relative Ausrichtung der drei Komponenten zueinander ist auf diese Weise vorgegeben und gleichzeitig wenigstens in rotatorischer Richtung gesichert, um eine möglichst einfache und sichere Montage der erfindungsgemäßen Gassackeinheit zu ermöglichen.

Weiterhin kann an dem Dämpfungselement gemäß der vorliegenden Erfindung wenigstens ein Rastfuß derart ausgebildet sein, dass bei Eingreifen des Ausrichtungsmittels in die Durchgangsöffnung des Modulträgers das Dämpfungselement über den wenigstens einen Rastfuß mit dem Modulträger verbindbar ist. Die Durchgangsöffnungen sowohl des Modulträgers als auch des Gasgenerators können zu dem Ausrichtungsmittel korrespondierende Formen oder alternativ größere Geometrien aufweisen.

Zur Aufnahme des wenigstens einen Rastfußes ist in dem Modulträger vorzugsweise wenigstens eine Rastöffnung vorgesehen. Lediglich bei korrekter Positionierung des Gasgenerators, des Dämpfungselements und des Modulträgers zueinander kann das Ausrichtungsmittel in den Durchgangsöffnungen des Gasgenerators und des Modulträgers aufgenommen und der Rastfuß des Dämpfungselements in dem Modulträger verrastet werden. Vorteilhafterweise ist somit die Ausrichtung der Komponenten zusätzlich durch die Aufnahme des Rastfußes in dem Modulträger sichergestellt.

Die integrale Konstruktion des Dämpfungselements ermöglicht die vollständige Entkopplung des Gasgenerators von dem Modulträger. Die Verbindungselemente zur Montage des Gasgenerators, des Dämpfungselements und des Modulträgers sind (mit Hilfe einer integralen Konstruktion) direkt in dem Dämpfungselement vorgesehen. Korrespondierende Elemente sind in dem angrenzenden Gasgenerator sowie dem Modulträger vorgesehen. Vorzugsweise besteht somit keine direkte Verbindung zwischen dem Gasgenerator und dem Modulträger. Der Gasgenerator und der Modulträger können über das Dämpfungselement relativ zueinander ausgerichtet und somit in rotatorischer sowie translatorischer Richtung gesichert bzw. gesperrt werden. Dabei können die einzelnen Komponenten direkt aneinander befestigbar sein. So ist eine serielle Montage der Komponenten, z.B. an einem Produktionsfließband, möglich, insbesondere da sich die Komponenten der Gassackeinheit gegenseitig halten.

Neben der erfindungsgemäßen Gassackeinheit betreffen nebengeordnete Aspekte der vorliegenden Erfindung ein Lenkrad mit einer solchen Gassackeinheit sowie ein Fahrzeuginsassensicherheitssystem mit einem Lenkrad und/oder einer erfindungsgemäßen Gassackeinheit.

Ferner umfasst die vorliegende Erfindung ein Verfahren zur Herstellung einer Gassackeinheit mit einem Dämpfungselement und einem Gasgenerator, wobei das Dämpfungselement wenigstens ein Eingriffsmittel und der Gasgenerator wenigstens ein Aufnahmemittel aufweist, so dass das Dämpfungselement und der Gasgenerator formschlüssig miteinander verbindbar sind, und wobei das Dämpfungselement ferner ein federnd gelagertes Ausrichtungsmittel aufweist. Gemäß dem Herstellungsverfahren wird nach dem Eingreifen des Dämpfungselements mit dem Eingriffsmittel in das Aufnahmemittel des Gasgenerators, das Dämpfungselement und der Gasgenerator entlang einer gemeinsamen Rotationsachse gegeneinander verdreht, bis das Ausrichtungsmittel in eine Durchgangsöffnung des Gasgenerators eingreift und ein weitere Relativdrehung sperrt, sodass eine formschlüssige Verbindung gebildet wird. Diese formschlüssige Verbindung entspricht vorzugsweise einem Bajonettverschluss.

Wenn das Dämpfungselement und der Gasgenerator, bevorzugterweise entlang des wenigstens einen Eingriffsmittels und des wenigstens einen Aufnahmemittels, aufeinander angeordnet werden, kann das Eingriffsmittel den Rand des Gasgenerators hintergreifen. Durch eine Rotationsbewegung werden das Eingriffsmittel und das Aufnahmemittel gegeneinander verdreht und liegen nicht mehr übereinander angeordnet vor. Somit ergibt sich eine formschlüssige Verbindung, indem das Eingriffsmittel den Rand des Gasgenerators hintergreift.

In einer weiteren Ausführungsform des erfindungsgemäßen Verfahrens ist vorgesehen, dass ein Modulträger mit einer Durchgangsöffnung vorgesehen ist, wobei das flexibel gelagerte Ausrichtungsmittel auf dem Dämpfungselement sowie die jeweils wenigstens eine, korrespondierende Durchgangsöffnung auf dem Gasgenerator und dem Modulträger derart angeordnet werden, dass der Gasgenerator und der Modulträger bei Eingreifen des Ausrichtungsmittels in die korrespondierenden Durchgangsöffnungen relativ zueinander positioniert werden. Ein vollständiges Eingreifen des Ausrichtungsmittels in die Durchgangsöffnungen zeigt dabei die korrekte Ausrichtung der Komponenten an. Gleichzeitigt verhindert das Ausrichtungsmittel des Dämpfungselements beim Eingreifen in die Durchgangsöffnungen des Gasgenerators und des Modulträgers ein Verdrehen der Komponenten relativ zueinander. So kann mit dem Ausrichtungsmittel sowohl die Ausrichtung als auch die Verifikation einer korrekten und vollständigen Montage der Gassackeinheit erfolgen.

Das erfindungsgemäße Verfahren sieht in einer vorteilhaften Ausgestaltung weiterhin vor, dass der wenigstens eine Rastfuß und das Ausrichtungsmittel derart an dem Dämpfungselement ausgebildet werden, dass bei einer Auslenkung des flexibel gelagerten Ausrichtungsmittels ein Einrasten des Rastfußes in den Modulträger, insbesondere in wenigstens eine Rastöffnung des Modulträgers, verhindert wird. Sofern das Ausrichtungsmittel in eine der korrespondierenden Öffnung des Gasgenerators oder des Modulträgers nicht bzw. lediglich teilweise eingreift, liegt eine Auslenkung des Ausrichtungsmittels vor. Vorteilhafterweise verhindert diese Auslenkung in der Folge die korrekte Verbindung der drei Komponenten miteinander.

Erst wenn das Ausrichtungsmittel in die korrespondierenden Durchgangsöffnungen des Gasgenerators, als auch des Modulträgers eingreift, liegt keine Auslenkung des Ausrichtungsmittels vor. Dann ist es möglich, den Gasgenerator formschlüssig mit dem Dämpfungselement und das Dämpfungselement mit dem Modulträger zu verbinden, indem der wenigstens eine Rastfuß des Dämpfungselements in die wenigstens eine Rastöffnung des Modulträgers einrastet.

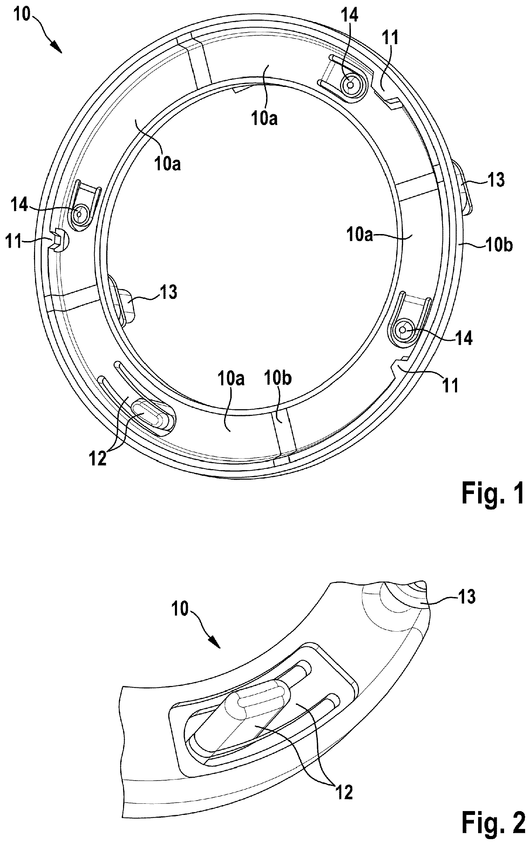

Die Erfindung wird im Folgenden anhand eines Ausführungsbeispiels unter Bezugnahme auf die beigefügten, schematischen Zeichnungen näher erläutert. Darin zeigen die Fig. 1 bis 4 jeweils unterschiedliche perspektivische Ansichten einer erfindungsgemäßen Gassackeinheit gemäß einem bevorzugten Ausführungsbeispiel bzw. der zugehörigen Komponenten.

Es zeigen schematisch:
- Fig. 1:: eine perspektivische Ansicht eines Dämpfungselements der erfindungsgemäßen Gassackeinheit nach einem bevorzugten Ausführungsbeispiel;
- Fig. 2:: eine Detailansicht eines Ausrichtungsmittels des Dämpfungselements gemäß Fig. 1;
- Fig. 3:: eine perspektivische Ansicht eines Gasgenerators mit dem Dämpfungselement gemäß Fig. 1; und
- Fig. 4:: eine Rückansicht einer erfindungsgemäßen Gassackeinheit nach einem bevorzugten Ausführungsbeispiel mit einem Modulträger und dem Gasgenerator gemäß Fig. 3.

Fig. 1 zeigt ein Ausführungsbeispiel eines Dämpfungselements 10 der Gassackeinheit. Das ringförmige Dämpfungselement 10 weist eine Auflagefläche 15 sowie einen äußeren Kragenrand 16 auf. An der Innenseite des Kragenrands 16 sind drei Eingriffsmittel 11 vorgesehen, die von der Auflagefläche 15 abgesetzt sind. Gemäß Fig. 1 weisen die Eingriffsmittel 11 jeweils eine trapezförmige Geometrie auf und sind entlang des Kragenrands 16 angeordnet. Die Randseiten sind in einem Winkel von ca. 45° spiegelsymmetrisch zueinander abgeflacht. Eines der Eingriffsmittel 11 hat eine größere Breite als die übrigen zwei Eingriffsmittel 11, woraus sich eine eindeutige Ausrichtung des Dämpfungselements 10 ergibt. Die übrigen zwei Eingriffsmittel 11 weisen eine identische Form auf. Weiterhin sind die Eingriffsmittel 11 um ca. 60° entlang der Innenseite des Kragenrands 16 radial zueinander versetzt angeordnet.

Entlang der Auflagefläche 15 des Dämpfungselements 10 sind drei Spannelemente 14 sowie ein Ausrichtungsmittel 12 jeweils um 45° versetzt zueinander angeordnet. Das Ausrichtungsmittel 12 ist auf der Auflagefläche 15 durch eine U-förmige Durchgangsöffnung bzw. Durchgangsnut ausgebildet, die das Dämpfungselement 10 durchdringt. Das Ausrichtungsmittel 12 weist einen Steg mit einer Nase an dessen freischwingendem Ende auf. Die Nase erstreckt sich von der Auflagefläche 15 ausgehend in beide Richtungen und ist mit einer ovalen Grundform ausgestaltet. Durch die U-förmige Durchgangsöffnung bildet der Steg des Ausrichtungsmittels 12 einen einseitig gelagerten Balken aus, der die federnde bzw. flexible Lagerung der Nase ermöglicht.

Die drei Spannelemente 14 sind ebenfalls mit Hilfe von U-förmigen Durchgangsöffnungen auf der Auflagefläche 15 ausgebildet. Am freischwingenden, abgerundeten Ende des jeweiligen Stegs ist ein Kugelabschnitt vorgesehen, der über die Auflagefläche 15 hervorsteht. Die Kugelabschnitte weisen einen Durchmesser auf, der der Breite des Stegs entspricht. Die drei Spannelemente 14 sind gemäß Fig. 1 identisch ausgebildet. Weiterhin ist jedes der Spannelemente 14 in direkter Nähe zu einem der Eingriffsmittel 11 angeordnet. Demnach ist das Ausrichtungsmittel 12 alleinstehend an einem Kreisabschnitt des ringförmigen Dämpfungselements 10 vorgesehen, während die Eingriffsmittel 11 und die Spannelemente 14 jeweils paarweise entlang des übrigen Kreisumfangs des Dämpfungselements 10 angeordnet sind.

Die in Fig. 1 gezeigte Ausführungsform des Dämpfungselements 10 setzt sich aus einem ersten, gasgeneratorseitigen Teil 10a und einem zweiten, modulträgerseitigen Teil 10b zusammen. Der erste Teil 10a des Dämpfungselements 10 ist gemäß Fig. 1 in vier gleich große Kreisabschnitte unterteilt. Auf jeweils einem der Kreisabschnitte des ersten Teils 10a sind, wie vorstehend beschrieben, die drei Eingriffsmittel 11 und die drei Spannelemente 14 paarweise angeordnet, während das Ausrichtungsmittel 12 auf einem der Kreisabschnitte alleinstehend angeordnet ist.

Der zweite Teil 10b des Dämpfungselements 10 weist Materialaussparungen bzw. Nuten auf, um die vier Kreisabschnitte des ersten Teils 10a des Dämpfungselements 10 aufzunehmen. Die Materialaussparungen in dem zweiten Teil 10b sind derart ausgebildet, dass Trennstege des zweiten Teils 10b zwischen den eingesetzten Kreisabschnitten des ersten Teils 10a vorliegen. Die L-förmige Querschnittsgeometrie des ersten Teils 10a schließt im zusammengesetzten Zustand nach Fig. 1 bündig mit dem zweiten Teil 10b ab, wobei der erste Teil 10a am Innendurchmesser der Auflagefläche 15 durch den zweiten Teil 10b abgestützt ist.

Weiterhin weist der zweite Teil 10b des Dämpfungselements 10 Durchgangsöffnungen entlang der Spannelemente 14 und dem Ausrichtungsmittel 12 auf, um deren flexible bzw. federnde Lagerung zu ermöglichen. Ferner sind den Eingriffsmitteln 11 gegenüberstehende Durchgangsöffnungen vorgesehen, die sich durch die Auflagefläche 15 des ersten Teils 10a sowie durch den zweiten Teil 10b hindurch erstrecken.

Der zweite Teil 10b des Dämpfungselements 10 weist eine modulträgerseitige Oberfläche auf, die dem ersten Teil 10a des Dämpfungselements 10 abgewandt ist. Auf dieser modulträgerseitigen Oberfläche sind gemäß Fig. 1 vier Rastfüße 13 vorgesehen. Diese sind jeweils den Trennstegen des zweiten Teils 10b gegenüberliegend angeordnet, die die vier Kreisabschnitte des ersten Teils 10a des Dämpfungselements 10 zueinander begrenzen. Die Nasen 13 sind mit einer ovalen Grundform ausgestaltet. Entlang der Höhenrichtung weisen die Rastfüße 13 einen variierenden Querschnitt mit wenigstens einer Verjüngung auf, so dass die Rastfüße 13 mit einem Modulträger 30 formschlüssig verrastbar sind.

Der erste Teil 10a des Dämpfungselements 10 kann ein anderes Material aufweisen als der zweite Teil 10b. Durch geeignete Materialwahl können die Biegesteifigkeiten der flexibel bzw. federnd gelagerten Spannelemente 14 und des Ausrichtungsmittels 12 angepasst werden. Vorzugsweise ist gemäß Fig. 1 vorgesehen, dass die Elemente und Durchgangsöffnungen in ihrer Erstreckung dem radialen Verlauf des ringförmigen Dämpfungselements 10 folgen. Es ist weiterhin möglich, die geometrischen Grundformen der Eingriffsmittel 11, der Spannelemente 14, des Ausrichtungsmittels 12 und der Rastfüße 13 anderweitig als in Fig. 1 gezeigt auszugestalten, sofern die Funktion des jeweiligen Elements erhalten bleibt.

In Fig. 2 ist ein Detail des Dämpfungselements 10 gemäß Fig. 1 dargestellt, das das Ausrichtungsmittel 12 zeigt. Der zweite Teil 10b des Dämpfungselements 10 weist eine Durchgangsöffnung auf, die das Ausrichtungsmittel 12 und die zugehörige U-förmige Durchgangsöffnung umrandet. Die Nase weist die Breite des Stegs auf. Weiterhin erstreckt sich die Nase am freischwingenden Ende des einseitig gelagerten Stegs des Ausrichtungsmittels 12 von der Auflagefläche 15 ausgehend in beide Richtungen (vgl. Fig. 1).

Insbesondere erstreckt sich die Nase in eine modulträgerseitige und in eine gasgeneratorseitige Richtung des Dämpfungselements 10. Gemäß Fig. 1 und 2 ist das Ausrichtungsmittel 12 somit von beiden Seiten des Dämpfungselements 10 insbesondere durch einen Kontakt mit der Nase flexibel auslenkbar.

Weiterhin ist in Fig. 2 ein Teil eines Rastfußes 13 dargestellt. Der gezeigte Rastfuß 13 ist auf der modulträgerseitigen Oberfläche des zweiten Teils 10b des Dämpfungselements 10 angeordnet. Insbesondere ist die Verjüngung des Querschnitts des Rastfußes 13 erkennbar. Diese wenigstens eine Querschnittsverjüngung ist mit einem Modulträger 30 formschlüssig verbindbar.

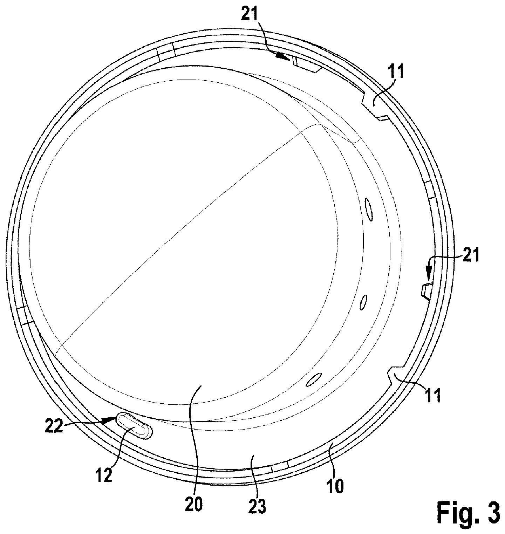

In Fig. 3 ist das Dämpfungselement gemäß Fig. 1 in Verbindung mit einem Gasgenerator 20 gezeigt. Der Gasgenerator 20 weist eine topfförmige Geometrie mit einer abgewinkelten, umlaufenden Randfläche 23 auf. Der Außendurchmesser des Gasgenerators 20 bzw. der abgewinkelten Randfläche 23 des Gasgenerators 20 ist korrespondierend zu dem Innendurchmesser des Kragenrands 16 des Dämpfungselements 10 gewählt. Entlang des äußeren Umfangs der Randfläche 23 sind drei Aufnahmemittel 21 vorgesehen, die eine korrespondierende Form zu den Eingriffsmitteln 11 aufweisen. Die Durchgangsöffnung 22 ist auf der Randfläche 23 des Gasgenerators 20 korrespondierend zu der Nase des Ausrichtungsmittels 12 ausgebildet. Die Aufnahmemittel 21 und die Durchgangsöffnung 22 liegen radial versetzt zueinander vor.

Aus Fig. 3 ist ersichtlich, dass die Aufnahmemittel 21 an dem Gasgenerator und die Eingriffsmittel 11 des Dämpfungselements 10 kongruent bzw. korrespondierend zueinander ausgestaltet sind. Auf diese Weise kann der Gasgenerator mit seiner Randfläche 23 auf der Auflagefläche 15 innerhalb des Innendurchmessers des Kragenrands 16 aufgelegt werden. Hierzu müssen die korrespondierenden Eingriffsmittel 11 und Aufnahmemittel 21 übereinander angeordnet sein, so dass die Eingriffsmittel 11 durch die Aufnahmemittel 21 hindurchgleiten können.

Die Eingriffsmittel 11 und die Aufnahmemittel 21 müssen in der Folge zueinander verdreht werden, um eine formschlüssige Verbindung zwischen dem Dämpfungselement 10 und dem Gasgenerator 20 herzustellen. Sofern die Randfläche 23 auf der Auflagefläche 15 aufliegt und die Eingriffsmittel 11 die Randfläche 23 hintergreifen, sind der Gasgenerator 20 und das Dämpfungselement 10 entlang ihrer gemeinsamen Rotationsachse gegeneinander verdrehbar. Hierbei wird der Gasgenerator 20 durch die Spannelemente 14 des Dämpfungselements 10 gegen die Unterseite der Eingriffsmittel 11 gepresst (vgl. Fig. 1). Somit wird ein versehentliches Lösen der formschlüssigen Verbindung während der Montage durch ein unbeabsichtigtes Verdrehen der Komponenten vorgebeugt. Die Verbindung von Dämpfungselement 10 und Gasgenerator 20 erfordert somit eine Kombination aus Druck- und Drehbewegung.

Eine Sicherung der Verbindung in rotatorischer Richtung erfolgt durch die Verdrehung des Gasgenerators 20 und des Dämpfungselements 10, so dass das federnd gelagerte Ausrichtungsmittel 12 in die Durchgangsöffnung 22 eingreift. Hierdurch wird die korrekte Ausrichtung des Gasgenerators 20 und des Dämpfungselements 10 angezeigt sowie ein weiteres Verdrehen der beiden Komponenten gegeneinander gesperrt.

Insbesondere liegen die Aufnahmemittel 21 und die Eingriffsmittel 11 bei Eingreifen des Ausrichtungsmittels 12 in die Durchgangsöffnung 22 verdreht zueinander vor. So ist eine formschlüssige Verbindung zwischen dem Gasgenerator 20 und dem Dämpfungselement 10 auch in translatorischer Richtung gewährleistet. Der Gasgenerator 20 und das Dämpfungselement 10 sind in dem Fall gemäß Fig. 3 sicher miteinander verbunden. Der Gasgenerator 20 und das Dämpfungselement 10 sind sowohl in translatorischer als auch in rotatorischer Richtung nicht mehr relativ zueinander bewegbar.

Durch Fig. 3 wird weiterhin verdeutlicht, dass sofern die korrespondierenden Eingriffsmittel 11 und Aufnahmemittel 21 z.B. übereinander liegen, das Ausrichtungsmittel 12 nicht in die Durchgangsöffnung 22 des Gasgenerators 20 eingreifen kann. In diesem Fall wird das flexibel gelagerte Ausrichtungsmittel 12 bei Kontakt mit der Randfläche 23 des Gasgenerators 20 ausgelenkt. Somit wird angezeigt, dass der Gasgenerator 20 und das Dämpfungselement 10 fehlerhaft zueinander ausgerichtet sind. Das Ausrichtungsmittel 12 weist nur dann keine Auslenkung mehr auf, wenn das Ausrichtungsmittel 12 in die Durchgangsöffnung 22 eingreift und das Dämpfungselement 10 und der Gasgenerator somit korrekt zueinander verdreht sind.

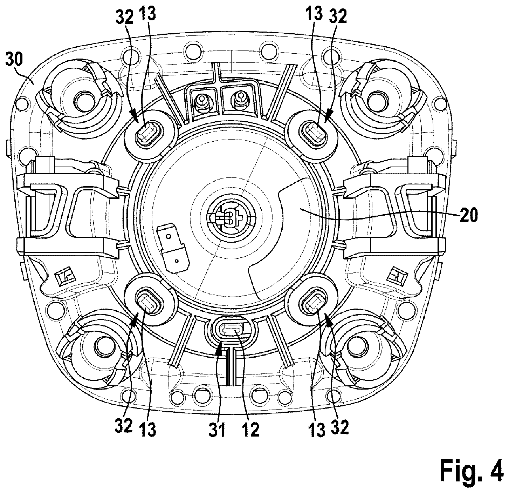

In Fig. 4 ist eine Ausführungsform der Gassackeinheit mit einem Gasgenerator 20 und einem Dämpfungselement 10 gemäß Fig. 3 dargestellt. Der Gasgenerator 20 und das Dämpfungselement 10 sind hierbei mit dem Modulträger 30 verbunden. Der Modulträger 30 weist eine zentrale Durchgangsöffnung auf, die in ihrem Durchmesser dem Innendurchmesser des Dämpfungselements 10 bzw. des topfförmigen Gasgenerators 20 entspricht. Um die zentrale Durchgangsöffnung des Modulträgers 30 herum sind Rastöffnungen 32 radial und um 45° versetzt zueinander angeordnet. Insbesondere sind die Rastöffnungen 32 gemäß der Ausführungsform in Fig. 4 derart an dem Modulträger 30 vorgesehen, dass sie auf den Winkelhalbierenden der Vertikal- und Horizontalachse des Modulträgers liegen. Des Weiteren weisen die Rastöffnungen 32 eine korrespondierende Form zu den Rastfüßen 13 auf, so dass das Dämpfungselement 10 mit den Rastfüßen 13 in den Rastöffnungen 32 verrastbar ist.

Weiterhin ist an dem Modulträger 30 eine Durchgangsöffnung 31 vorgesehen, die auf einem gemeinsamen Radius mit den Rastöffnungen 32 um die zentrale Durchgangsöffnung des Modulträgers 30 herum angeordnet ist. Insbesondere ist vorgesehen, dass die Durchgangsöffnung 31 symmetrisch zur Vertikalachse des Modulträgers 30 angeordnet ist. Die Durchgangsöffnung 31 weist eine ovale Form auf, so dass die Nase, wenigstens ein Teil des Stegs des Ausrichtungsmittels 12 und ein Teil der zugehörigen U-förmigen Durchgangsnut von der Durchgangsöffnung 31 umrandet ist.

Durch das Eingreifen des Ausrichtungsmittels 12 in die Durchgangsöffnung 31 ergibt sich eine grundlegende Ausrichtung des Dämpfungselements 10 gegenüber dem Modulträger 30. Die Rastfüße 13 werden in diesem Zuge zu den Durchgangsöffnungen 31 ausgerichtet. Die exakte Positionierung und die formschlüssige Verbindung in translatorischer und rotatorischer Richtung erfolgt durch das Einrasten der Rastfüße 13 des Dämpfungselements 10 in die Rastöffnungen 32 des Modulträgers 30. Hierzu greift der Rand der jeweiligen Rastöffnung 32 in den sich wenigstens einmal verjüngenden Querschnitt der Rastfüße 13 ein (vgl. Fig. 1 und Fig. 2).

Gleichzeitig kann durch eine entsprechende Ausgestaltung der Durchgangsöffnung 31 und der Rastfüße 13 eine Verbindung zwischen den Rastfüßen 13 und den Rastöffnungen 32 verhindert werden, sofern das Ausrichtungsmittel 12 ausgelenkt ist. Diese Situation kann beispielsweise vorliegen, wenn das Ausrichtungsmittel 12 nicht in das Aufnahmemittel 21 des Gasgenerators 20 eingreift und mit der Randfläche 23 des Gasgenerators 20 in Kontakt steht. Weist das Ausrichtungsmittel 12 eine derartige Auslenkung auf, kommt der Steg in Kontakt mit dem Rand der Durchgangsöffnung 31 des Modulträgers 30. Das Dämpfungselement 10 ist nicht vollständig auf dem Modulträger 30 auflegbar. In der Folge wird durch das ausgelenkte Ausrichtungsmittel 12 ein Einrasten der Rastfüße 13 in die Rastöffnungen 32 des Modulträgers 30 verhindert.

Nur wenn das Ausrichtungsmittel 12 in die Durchgangsöffnung 22 des Gasgenerators 20 vollständig eingreift, kann das Ausrichtungsmittel 12 korrekt in die Durchgangsöffnung 31 eingreifen. In diesem Fall ist eine formschlüssige Verbindung der Rastfüße 13 mit den Rastöffnungen 32 des Modulträgers 30 möglich.

Das Ausrichtungsmittel 12 stellt in Verbindung mit dem Aufnahmemittel 21 und der Durchgangsöffnung 31 somit einen "Poka Yoke"-Mechanismus dar, der einer fehlerhaften Ausrichtung und Verbindung des Gasgenerators 20, des Dämpfungselements 10 und des Modulträgers 30 vorbeugt. Die Komponenten werden mit Hilfe der Eingriffsmittel 11 und der Aufnahmemittel 21 sowie der Rastfüße 13 und der Rastöffnungen 32 in rotatorischer und translatorischer Richtung formschlüssig miteinander verbunden.

### Bezugszeichenliste

- 10: Dämpfungselement
- 10a: Erster Teil (des Dämpfungselements)
- 10b: Zweiter Teil (des Dämpfungselements)
- 11: Eingriffsmittel
- 12: Ausrichtungsmittel
- 13: Rastfuß
- 14: Spannelement
- 15: Auflagefläche (des Dämpfungselements)
- 16: Kragenrand (des Dämpfungselements)
- 20: Gasgenerator
- 21: Aufnahmemittel
- 22: Durchgangsöffnung (des Gasgenerators)
- 23: Randfläche (des Gasgenerators)
- 30: Modulträger
- 31: Durchgangsöffnung (des Modulträgers)
- 32: Rastöffnung

## Patentansprüche

1. Gassackeinheit, insbesondere Airbageinheit, mit
einem Gasgenerator (20),
einem Modulträger (30) und
einem Dämpfungselement (10), das zwischen dem Gasgenerator (20) und dem Modulträger (30) angeordnet ist,
wobei das Dämpfungselement (10) wenigstens ein Eingriffsmittel (11) und der Gasgenerator (20) wenigstens ein Aufnahmemittel (21) aufweist, so dass das Dämpfungselement (10) und der Gasgenerator (20) formschlüssig, vorzugsweise in Form eines Bajonettverschlusses, miteinander verbindbar sind,
wobei das Dämpfungselement (10) zumindest ein Ausrichtungsmittel (12) aufweist, mittels dessen der Gasgenerator (20) und der Modulträger (30) in rotatorischer Richtung zueinander ausrichtbar sind,
**dadurch gekennzeichnet, dass** am Gasgenerator (20) eine Durchgangsöffnung (22) zur Aufnahme des Ausrichtungsmittels (12) und am Modulträger (30) eine Durchgangsöffnung (31) zur Aufnahme des Ausrichtungsmittels (12) ausgebildet ist.

2. Gassackeinheit nach Anspruch 1, **dadurch gekennzeichnet, dass** das Ausrichtungsmittel (12) eine modulträgerseitige Erstreckung und eine gasgeneratorseitige Erstreckung aufweist, und/oder dass das Ausrichtungsmittel (12) in modulträgerseitige Richtung und in gasgeneratorseitige Richtung flexibel bzw. federnd gelagert ist.

3. Gassackeinheit nach einem der vorhergehenden Ansprüche, **dadurch gekennzeichnet, dass** das Dämpfungselement (10) ein ringförmiges Dämpfungselement mit einem vorzugsweise L-förmigen Querschnitt ist.

4. Gassackeinheit nach einem der vorhergehenden Ansprüche, **dadurch gekennzeichnet, dass** das Eingriffsmittel (11) an einer Innenseite, vorzugsweise einem Innendurchmesser, des Dämpfungselements (10) angeordnet ist, wobei, vorzugsweise, das Eingriffsmittel (11) als wenigstens ein Materialvorsprung ausgebildet ist.

5. Gassackeinheit nach einem der vorhergehenden Ansprüche, **dadurch gekennzeichnet, dass** das Aufnahmemittel (21) des Gasgenerators (20) an einem Rand des Gasgenerators (20) als wenigstens ein Materialausschnitt, vorzugsweise in korrespondierender Form zum Eingriffsmittel (11), ausgebildet ist.

6. Gassackeinheit nach einem der vorhergehenden Ansprüche, **dadurch gekennzeichnet, dass** an dem Dämpfungselement (10) wenigstens ein Rastfuß (13) derart ausgebildet ist, dass bei Eingreifen des Ausrichtungsmittels (12) in den Materialausschnitt (31) des Modulträgers (30) das Dämpfungselement (10) über den wenigstens einen Rastfuß (13) mit dem Modulträger (30), insbesondere durch Verrasten in einer korrespondierender Rastöffnung 32 des Modulträgers (30), verbindbar ist.

7. Fahrzeuginsassensicherheitssystem, mit einem Lenkrad und einer Gassackeinheit nach einem der vorhergehenden Ansprüche, wobei die Gassackeinheit mit dem Lenkrad verbindbar oder verbunden ist und eine den Gassack zumindest insassenseitig überdeckende Abdeckkappe aufweist.

8. Verfahren zur Herstellung einer Gassackeinheit, insbesondere nach einem der Ansprüche 1 bis 6, wobei die Gassackeinheit ein Dämpfungselement (10) und einen Gasgenerator (20) umfasst, wobei das Dämpfungselement (10) wenigstens ein Eingriffsmittel (11) und der Gasgenerator (20) wenigstens ein Aufnahmemittel (21) aufweist, sodass das Dämpfungselement (10) und der Gasgenerator (20) formschlüssig miteinander verbindbar sind, und wobei das Dämpfungselement (10) ferner ein federnd gelagertes Ausrichtungsmittel (12) aufweist, **gekennzeichnet durch** folgende Schritte:
Nach einem Eingreifen des Dämpfungselements (10) mit dem Eingriffsmittel (11) in das Aufnahmemittel (21) des Gasgenerators (20) werden das Dämpfungselement (10) und der Gasgenerator (20) entlang einer gemeinsamen Rotationsachse gegeneinander verdreht, bis das Ausrichtungsmittel (12) in eine Durchgangsöffnung (22) des Gasgenerators (20) eingreift und eine weitere Relativdrehung sperrt, so dass zwischen dem Gasgenerator (20) und dem Dämpfungselement (10) eine formschlüssige Verbindung, vorzugsweise in Form eines Bajonettverschlusses, vorliegt.

9. Verfahren nach Anspruch 8, **dadurch gekennzeichnet, dass** ein Modulträger (30) mit einer Durchgangsöffnung (31) vorgesehen ist und das flexibel gelagerte Ausrichtungsmittel (12) auf dem Dämpfungselement (10) sowie die jeweils wenigstens eine, korrespondierende Durchgangsöffnung (22, 31) auf dem Gasgenerator (20) und dem Modulträger (30) derart angeordnet werden, dass der Gasgenerator (20) und der Modulträger (30) bei Eingreifen des Ausrichtungsmittels (12) in die Durchgangsöffnungen (22, 31) relativ zueinander positioniert werden, wobei wenigstens ein Rastfuß (13) und das Ausrichtungsmittel (12) derart an dem Dämpfungselement (10) ausgestaltet sind, dass bei einer Auslenkung des flexibel gelagerten Ausrichtungsmittels (12) ein Einrasten des Rastfußes (13) in den Modulträger (30) verhindert wird.

## Claims

1. An airbag unit, in particular an airbag unit comprising
a gas generator (20),
a module carrier (30) and
a damping element (10) being positioned between the gas generator (20) and the module carrier (30),
the damping element (10) including at least one engaging means (11) and the gas generator (20) at least one receiving means (21) so that the damping element (10) and the gas generator (20) are positively connectable to each other, preferably in the form of a bayonet lock,
the damping element (10) including at least one aligning means (12) through which the gas generator (20) and the module carrier (30) can be aligned relative to each other in the rotational direction,
**characterized in that** a through-hole (22) for receiving the aligning means (12) is formed on the gas generator (20) and a through-hole (31) for receiving the aligning means (12) is formed on the module carrier (30).

2. The airbag unit according to claim 1, **characterized in that** the aligning means (12) includes an extension on the module carrier side and an extension on the gas generator side and/or that the aligning means (12) is flexibly or resiliently supported in the direction of the module carrier and in the direction of the gas generator.

3. The airbag unit according to any one of the preceding claims, **characterized in that** the damping element (10) is an annular damping element having a preferably L-shaped cross-section.

4. The airbag unit according to any one of the preceding claims, **characterized in that** the engaging means (11) is arranged on an inside, preferably an inner diameter, of the damping element (10), wherein preferably the engaging means (11) is configured as at least one material projection.

5. The airbag unit according to any one of the preceding claims, **characterized in that** the receiving means (21) of the gas generator (20) is formed on a rim of the gas generator (20) as at least one material cutout, preferably in a form corresponding to the engaging means (11).

6. The airbag unit according to any one of the preceding claims, **characterized in that** at least one detent foot (13) is formed on the damping element (10) such that, when the aligning means (12) engages in the material cutout (31) of the module carrier (30), the damping element (10) can be connected to the module carrier (30) via the at least one detent foot (13), especially by locking in place in a corresponding detent aperture (32) of the module carrier (30).

7. A vehicle occupant safety system comprising a steering wheel and an airbag unit according to any one of the preceding claims, wherein the airbag unit is connectable or connected to the steering wheel and includes a cap covering the airbag at least on the occupant side.

8. A method of manufacturing an airbag unit, especially according to any one of the claims 1 to 6, the airbag unit including a damping element (10) and a gas generator (20), wherein the damping element (10) comprises at least one engaging means (11) and the gas generator (20) at least one receiving means (21) so that the damping element (10) and the gas generator (20) are positively connectable to each other and wherein the damping element (10) further includes a resiliently supported aligning means (12), **characterized by** the following steps:
Upon engagement of the damping element (10) with the engaging means (11) in the receiving means (21) of the gas generator (20) the damping element (10) and the gas generator (20) are twisted against each other along their joint axis of rotation until the aligning means (12) engages in a through-hole (22) of the gas generator (20) and further twisting relative to each other is inhibited so that a positive connection, preferably in the form of a bayonet lock, is provided between the gas generator (20) and the damping element (10).

9. The method according to claim 8, **characterized in that** a module carrier (30) including a through-hole (31) is provided and the flexibly supported aligning means (12) is arranged on the damping element (10) and the, respective at least one, corresponding through-hole (22, 31) is arranged on the gas generator (20) and the module carrier (30) so that the gas generator (20) and the module carrier (30) are positioned relative to each other upon engagement of the aligning means (12) in the through-holes (22, 31), wherein at least one detent foot (13) and the aligning means (12) are formed on the damping element (10) such that, when the flexibly supported aligning means (12) deflects, the detent foot (13) is prevented form locking in the module carrier (30).

## Revendications

1. Un coussin gonflable, en particulier un airbag, avec
un générateur de gaz (20),
un support de module (30) et
un élément amortisseur (10) qui est disposé entre le générateur de gaz (20) et le support de module (30),
pour lequel l'élément amortisseur (10) présente au moins un moyen d'engagement (11) et que le générateur de gaz (20) présente au moins un moyen de réception (21), de sorte que l'élément amortisseur (10) et le générateur de gaz (20) par leur forme, de préférence sous la forme d'une prise à baïonnette, sont reliables l'un avec l'autre,
pour lequel l'élément amortisseur (10) présente au moins un moyen d'alignement (12), au moyen duquel le générateur de gaz (20) et le support de module (30) peuvent être alignés l'un dans l'autre dans le sens de rotation,
**caractérisé en ce que** sur le générateur de gaz (20) une ouverture traversante (22) pour recevoir le moyen d'alignement (12) est formée et que sur le support de module (30) une ouverture traversante (31) pour recevoir le moyen d'alignement (12) sont disposées.

2. Coussin gonflable selon la revendication 1, **caractérisée en ce que** le moyen d'alignement (12) présente une extension côté support de module et une extension côté générateur de gaz, et / ou que le moyen d'alignement (12) est monté de manière flexible ou élastique en direction du côté support de module et en direction du côté générateur de gaz.

3. Coussin gonflable selon l'une des revendications précédentes, **caractérisée en ce que** l'élément amortisseur (10) est un élément amortisseur annulaire avec une section transversale de préférence en forme de L.

4. Coussin gonflable selon l'une des revendications précédentes, **caractérisé en ce que** le moyen d'engagement (11) de l'élément amortisseur (10) est disposé sur un côté intérieur, de préférence un diamètre intérieur, pour lequel, de préférence, le moyen d'engagement (11) est réalisé par au moins une protrusion de matière.

5. Coussin gonflable selon l'une des revendications précédentes, **caractérisé en ce que** le moyen de réception (21) du générateur de gaz (20) sur un bord du générateur de gaz (20) est réalisé par au moins une découpe de matière, de préférence sous une forme correspondante au moyen d'engagement (11).

6. Coussin gonflable selon l'une des revendications précédentes, **caractérisé en ce qu'**au moins un pied de verrouillage (13) est formé sur l'élément amortisseur (10) de telle manière que lorsque les moyens d'alignement (12) s'engagent dans la découpe de matière (31) du support de module (30) l'élément amortisseur (10) peut être relié au support de module (30) via au moins un pied de verrouillage (13), en particulier par verrouillage dans une ouverture de verrouillage correspondante (32) du support de module (30).

7. Système de protection d'occupant de véhicule, avec un volant et un coussin gonflable selon l'une des revendications précédentes, pour lequel le coussin gonflable peut être connectable ou connectée au volant et qui présente un couvercle couvrant le coussin gonflable au moins du côté occupant.

8. Procédé de fabrication d'un coussin gonflable, en particulier selon l'une des revendications 1 à 6, pour lequel le coussin gonflable comprend un élément amortisseur (10) et un générateur de gaz (20), pour lequel l'élément amortisseur (10) présente au moins un moyen d'engagement (11) et le générateur de gaz (20) présente au moins un moyen de réception (21), de sorte que l'élément amortisseur (10) et le générateur de gaz (20) peuvent être connectés l'un à l'autre par leur forme, et pour lequel l'élément amortisseur (10) a également un moyen d'alignement monté sur ressort (12), **caractérisé par** les étapes suivantes:
Après engagement de l'élément amortisseur (10) avec le moyen d'engagement (11) dans le moyen de réception (21) du générateur de gaz (20), l'élément amortisseur (10) et le générateur de gaz (20) sont tournés l'un par rapport à l'autre le long d'un axe de rotation commun, jusqu'à ce que le moyen d'alignement (12) s'engage dans une ouverture traversante (22) du générateur de gaz (20) et bloque une autre rotation relative, de sorte qu'il existe un verrouillage par forme, de préférence sous la forme d'un verrou à baïonnette, entre le générateur de gaz (20) et l'élément amortisseur (10).

9. Procédé selon la revendication 8, **caractérisé en ce qu'**un support de module (30) est pourvu d'une ouverture traversante (31) et des moyens d'alignement montés de manière flexible (12) sur l'élément amortisseur (10) de sorte qu'au moins une ouverture traversante correspondante (22, 31) est disposée sur le générateur de gaz (20) et sur le support de module (30), de telle manière que le générateur de gaz (20) et le support de module (30) sont positionnés l'un par rapport à l'autre par engagement du moyen d'alignement (12) dans les ouvertures traversantes (22, 31), pour lequel au moins un pied de verrouillage (13) et le moyen d'alignement (12) sont configurés sur l'élément amortisseur (10) de telle manière que lorsque le moyen d'alignement monté de manière flexible (12) est dévié, le pied de verrouillage (13) ne puisse pas s'encliqueter dans le support de module (30).
